# EUROPÄISCHE PATENTSCHRIFT

(11) **EP 0 802 096 B1**
(45) Veröffentlichungstag und Bekanntmachung des Hinweises auf die Patenterteilung: **25.07.2001**
(21) Anmeldenummer: 97104855.8
(22) Anmeldetag: 21.03.1997
(51) Int. Cl.: B60R 22/22

(54) **Gurtstraffer**
Belt pretensionner
Prétendeur pour ceinture de sécurité

(30) Priorität: 16.04.1996 DE 29606896 U
(43) Veröffentlichungstag der Anmeldung: 22.10.1997
(73) Patentinhaber: TRW Occupant Restraint Systems GmbH & Co. KG, 73551 Alfdorf (DE)
(72) Erfinder: Greiner, Gerhard, 73540 Heubach (DE); Wier, Franz, 73571 Göggingen (DE); Seeberger, Franz, 73527 Schwäbisch Gmünd (DE)
(74) Vertreter: Degwert, Hartmut, Dipl.-Phys.

(56) Entgegenhaltungen:
- EP-A- 0 205 901
- EP-A- 0 217 175
- US-A- 4 008 909
- PATENT ABSTRACTS OF JAPAN vol. 010, no. 357 (M-540), 2.Dezember 1986 & JP 61 155039 A (NISSAN MOTOR CO LTD), 14.Juli 1986,

## Beschreibung

Die Erfindung betrifft ein Gurtstraffsystem für einen 3-Punkt-Gurt in Fahrzeugen, mit einem am Fahrzeugaufbau befestigten Gurtaufroller als erstem Verankerungspunkt, einem Gurtschloss als zweitem sowie einem Endbeschlag als drittem Verankerungspunkt und mit einem bei Aktivierung Zug ausübenden Strafferantrieb. Es ist im Stand der Technik bekannt, dass ein Gurtstraffsystem an den Gurtaufroller oder das Gurtschloss angreift. Das Gurtstraffsystem ist üblicherweise an der B-Säule des Fahrzeugs angeordnet oder, wenn er an das Gurtschloss angreift, neben dem Sitz am Boden des Fahrzeugs befestigt. Bei beengten Platzverhältnissen, z.B. an den Rücksitzen, können solche Anordnungen nach dem Stand der Technik schwierig unterzubringen sein.

Aus der EP-A-0 205 901 ist ein gattungsgemäßes Gurtstraffsystem für einem 3-Punkt-Gurt in Fahrzeugen bekannt, mit einem Gurtband, einem am Fahrzeugaufbau befestigten Gurtaufroller als erstem Verankerungspunkt, einem Gurtschloss als zweitem sowie einem Endbeschlag als drittem Verankerungspunkt und mit einem bei Aktivierung Zug ausübenden Strafferantrieb, wobei das Gurtband zwischen dem Gurtschloss und der Angriffstelle des Strafferantriebs über einen am Fahrzeugaufbau verankerten Umlenkbeschlag geführt ist.

Gegenüber bekannten Gurtstraffsystemen bietet die erfindungsgemäße Ausbildung verschiedene Unterbringungsmöglichkeiten auch bei beengten Platzverhältnissen im Fahrzeug, z.B. an den Rücksitzen.

Erfindungsgemäß ist bei einem Gurtstraffsystem für einen 3-Punkt-Gurt in Fahrzeugen, wie er beispielsweise aus der genannten EP-A-0 205 901 bekannt ist, vorgesehen, dass der Strafferantrieb nahe dem Endbeschlag an dem zwischen Gurtschloss und Endbeschlag gelegenen Gurtabschnitt unter Bildung einer Gurtschlaufe angreift. Dadurch wird der erforderliche Strafferhub halbiert, so dass die Baulänge des Strafferantriebs, der beispielsweise auf der Rückseite des Rücksitzes, auf der Türschwelle oder unter der Sitzpolsterung angeordnet sein kann, reduziert werden kann.

Eine Ausführungsform, bei der der Strafferantrieb über ein Zugseil an dem zwischen Gurtschloss und Endbeschlag gelegenen Gurtabschnitt angeschlossen ist, ist insbesondere dann vorteilhaft, wenn nicht genügend Platz vorhanden ist, um den Strafferantrieb direkt angrenzend an den Endbeschlag anzuordnen.

Unter beengten Platzverhältnissen besonders vorteilhaft ist eine Ausführungsform, bei der der Umlenkbeschlag und der Endbeschlag nebeneinander angeordnet sind und insbesondere mittels eines gemeinsamen Schraubbolzens am Fahrzeugaufbau verankert sind.

Zur Verringerung der an dem Umlenkbeschlag auftretenden Reibung, ist dieser vorteilhafterweise mit einer drehbaren Umlenkrolle versehen, oder die Umlenkfläche ist mit einer reibungsmindernden Oberflächenstruktur versehen.

Vorteilhafterweise ist der Strafferantrieb durch einen pyrotechnischen Linearantrieb gebildet.

In den beigefügten Zeichnungen zeigen:
Fig. 1 eine Vorderansicht eines Fahrzeugvordersitzes und ein 3-Punkt-Gurtsystem mit einem Gurtstraffer;
Fig. 2 eine Rücksitzgruppe, die mit einer Variante des in Fig. 1 gezeigten Gurtstraffsystems versehen ist, wobei Teile des Rücksitzes ausgeschnitten dargestellt sind; und
Fig. 3 eine schematische Teilschnittansicht von Teilen einer Ausführungsform des Gurtstraffsystems gemäß der Erfindung.

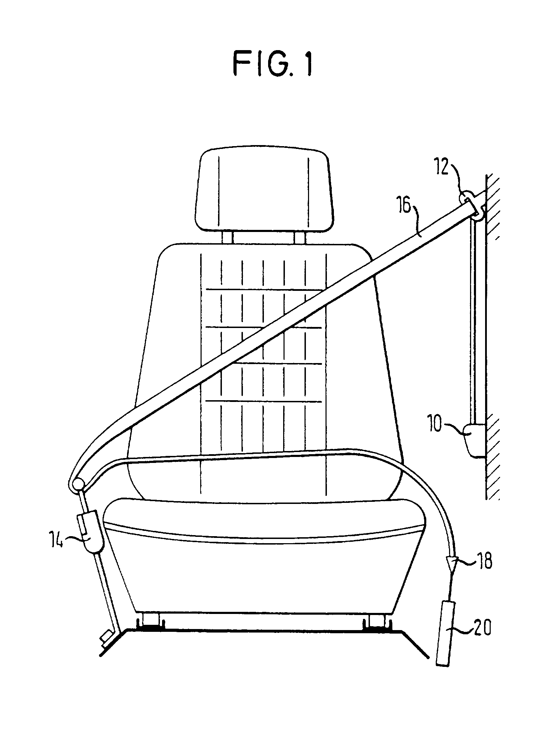

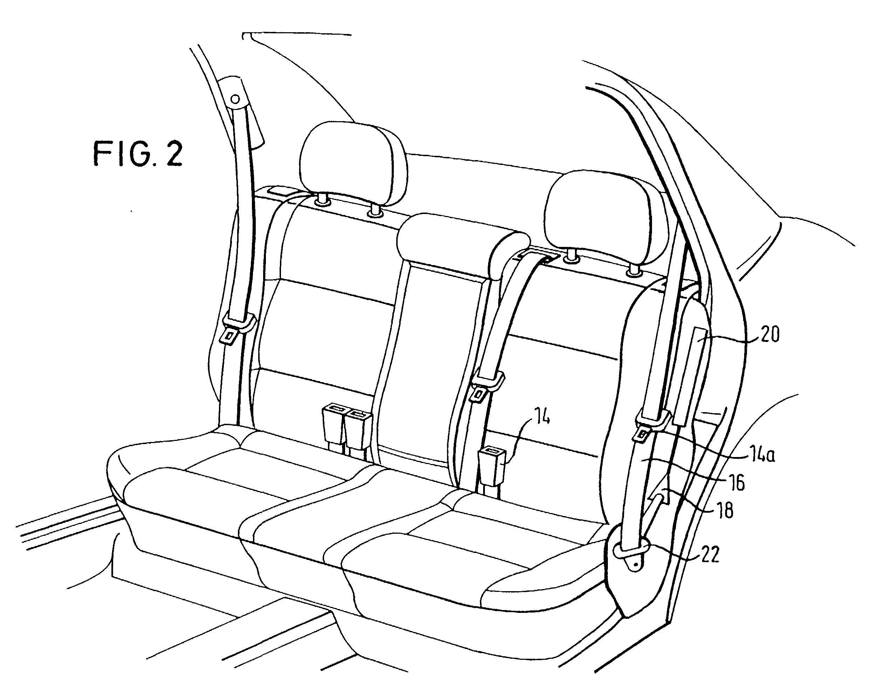

Die im folgenden beschriebenen Figuren 1 und 2 zeigen keine Ausführungsbeispiele der Erfindung, sondern lediglich Darstellungen, die das Verständnis der Erfindung erleichtern.

Fig. 1 zeigt einen Vordersitz in einem Fahrzeug mit 3-Punkt-Gurtsystem. Ein Gurtaufroller 10 und ein oberer Umlenkbeschlag 12 sind an einer Seitenwand des Fahrzeugs befestigt. Ein Gurtband 16 läuft von dem Gurtaufroller 10 zu dem oberen Umlenkbeschlag 12, zu einem Gurtschloss 14 und ist durch einen Endbeschlag 18 abgeschlossen. Ein pyrotechnischer linearer Strafferantrieb 20 greift direkt an den Endbeschlag 18 an. Der Gurtaufroller 10, das Gurtschloss 14 und der Endbeschlag 18 legen drei Verankerungspunkte des Gurtsystems fest. Der Gurtaufroller 10 und der obere Umlenkbeschlag 12 sind direkt am Fahrzeugaufbau befestigt, wohingegen das Gurtschloss 14 mit dem Fahrzeugaufbau durch einen zusätzlichen Beschlag verbunden ist. Bei dem in Fig. 1 gezeigten Gurtstraffsystem greift ein Ende des Strafferantriebs 20 an den Endbeschlag 18 an, und das andere Ende ist an dem Fahrzeugaufbau befestigt. Der Strafferantrieb 20 wird durch eine herkömmliche Auslösevorrichtung aktiviert. Bei Aktivierung des Strafferantriebs 20 wird der Endbeschlag 18 nach unten gezogen, wodurch auf das Gurtband 16 Zug ausgeübt wird und Gurtbandspiel beseitigt wird.

Fig. 2 zeigt eine Rücksitzgruppe in einem Fahrzeug mit drei 3-Punkt-Gurtsystem. Teile des Rücksitzes sind ausgeschnitten dargestellt, um den pyrotechnischen, linearen Strafferantrieb 20, den Endbeschlag 18 und einen unteren Umlenkbeschlag 22 eines 3-Punkt-Gurtsystems zu zeigen, wobei alle Gurtsysteme mit ähnlichen Anordnungen versehen sind. Der pyrotechnische, lineare Strafferantrieb 20 greift an den Endbeschlag 18 an, und das Gurtband 16 ist zwischen dem Gurtschloss 14 bzw. Steckzunge 14a und dem Endbeschlag 18 über den unteren Umlenkbeschlag 22 geführt. Der Strafferantrieb 20 und der untere Umlenkbeschlag 22 sind unter der Sitzpolsterung angeordnet. Auf diese Weise kann der Strafferantrieb 20 unter den beengten Platzverhältnissen im Bereich der Rücksitze untergebracht werden. Um eine Behinderung des Gurtbandes 16 durch an dem Umlenkbeschlag 22 auftretende Reibung zu vermeiden, ist die Umlenkfläche mit einer reibungsmindernden Oberflächenstruktur versehen.

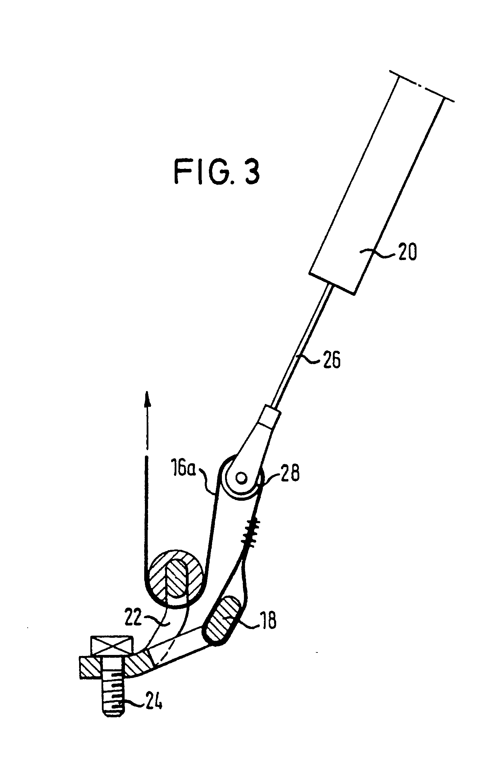

Fig. 3 zeigt eine erfindungsgemäße Ausführungsform, bei der der Endbeschlag 18 und ein unterer Umlenkbeschlag 22 nebeneinander mit einem gemeinsamen Schraubbolzen 24 am Fahrzeugaufbau befestigt sind. Der Strafferantrieb 20 greift über ein Zugseil 26 und eine Rolle 28 am Gurtbandabschnitt 16a zwischen Umlenkbeschlag 22 und Endbeschlag 18 unter Bildung einer Gurtbandschlaufe an. Die Verwendung des Zugseils 26 eröffnet zahlreiche Möglichkeiten für die Anordnung des Strafferantrieb 20. Durch Bilden einer Schlaufe 16a in dem Gurtband wird der notwendige Hub des Gurtstraffsystems, um eine vorbestimmte Verkürzung des Gurtbandes zu erzielen, halbiert. Der Strafferantrieb 20 kann dadurch kürzer ausgeführt werden, wodurch seine Unterbringung erleichtert ist. Um die Reibung zwischen dem Gurtband und dem Umlenkbeschlag 22 zu vermindern, ist der Umlenkbeschlag 22 mit einer Umlenkrolle versehen. Auch der Strafferantrieb 20 greift an dem Gurtband mittels einer Rolle 28 an. Da der Endbeschlag 18 und der untere Umlenkbeschlag 22 an dem Fahrzeugaufbau mit einem gemeinsamen Schraubbolzen 24 befestigt sind, ist kein zusätzlicher Befestigungspunkt an dem Fahrzeugaufbau erforderlich.

## Patentansprüche

1. Gurtstraffsystem für einen 3-Punkt-Gurt in Fahrzeugen, mit einem Gurtband (16), einem am Fahrzeugaufbau befestigten Gurtaufroller (10) als erstem Verankerungspunkt, einem Gurtschloss (14) als zweitem sowie einem Endbeschlag (18) als drittem Verankerungspunkt und mit einem bei Aktivierung Zug ausübendenen Strafferantrieb (20), wobei das Gurtband (16) zwischen dem Gurtschloss (14) und der Angriffsstelle des Strafferantriebs (20) über einen am Fahrzeugaufbau verankerten Umlenkbeschlag (22) geführt ist, dadurch gekennzeichnet, dass der Strafferantrieb (20) nahe dem Endbeschlag (18) an dem zwischen Umlenkbeschlag (22) und Endbeschlag (18) gelegenen Gurtabschnitt (16a) unter Bildung einer Gurtschlaufe angreift.

2. Gurtstraffsystem nach Anspruch 1, dadurch gekennzeichnet, dass der Strafferantrieb (20) über ein Zugseil (26) an dem zwischen Gurtschloss (14) und Endbeschlag (18) gelegenen Gurtabschnitt (16a) angeschlossen ist.

3. Gurtstraffsystem nach Anspruch 1 oder 2, dadurch gekennzeichnet, dass der Umlenkbeschlag (22) und der Endbeschlag (18) nebeneinander angeordnet und insbesondere mittels eines gemeinsamen Schraubbolzens (24) am Fahrzeugaufbau verankert sind.

4. Gurtstraffsystem nach einem der Ansprüche 1 bis 3, dadurch gekennzeichnet, dass der Umlenkbeschlag (22) reibungsarm ausgerüstet ist, insbesondere durch Verwendung einer drehbaren Umlenkrolle oder einer reibungsmindernden Oberflächenstruktur an der Umlenkfläche.

5. Gurtstraffsystem nach einem der vorstehenden Ansprüche, dadurch gekennzeichnet, dass der Strafferantrieb (20) durch einen pyrotechnischen Linearantrieb gebildet ist.

## Claims

1. A belt tensioning system for a 3-point vehicular seat belt, comprising a belt webbing (16), a belt retractor (10) as a first anchoring point being fixed to the vehicle body, a belt buckle (14) as a second anchoring point and an end fitting (18) as a third anchoring point, and a tensioner drive (20) exerting a tensile force when activated, the belt webbing (16) being guided between the belt buckle (14) and the point of engagement of the tensioner drive (20) via a deflector fitting (22) anchored to the vehicle body, characterized in that the tensioner drive (20) engages the belt section (16a) located between the deflector fitting (22) and the end fitting (18) close to the end fitting (18), thereby forming a belt loop.

2. The belt tensioning system as set forth in claim 1, characterized in that the tensioner drive (20) is connected via a traction cable (26) to the belt section (16a) located between the belt buckle (14) and the end fitting (18).

3. The belt tensioning system as set forth in claim 1 or 2, characterized in that the deflector fitting (22) and the end fitting (18) are arranged side by side and in particular are anchored to the vehicle body by means of a common through-bolt (24).

4. The belt tensioning system as set forth in any of the claims 1 to 3, characterized in that the deflector fitting (22) is provided for low-friction operation, particularly by employing a rotatable deflection sheave or an anti-friction surface structure on the deflecting surface.

5. The belt tensioning system as set forth in any of the preceding claims, characterized in that the tensioner drive (20) is formed by a pyrotechnical linear drive.

## Revendications

1. Système de tendeur de ceinture pour une ceinture à trois points dans des véhicules, comportant une sangle de ceinture (16), un enrouleur de ceinture (10) fixé sur le châssis de véhicule, en tant que premier point d'ancrage, un fermoir de ceinture (14) en tant que deuxième point d'ancrage et une ferrure terminale (18) en tant que troisième point d'ancrage, et comportant un mécanisme de tension (20) exerçant une traction lorsqu'il est activé, la sangle de ceinture (16) étant guidée entre le fermoir de ceinture (14) et le point d'attaque du mécanisme de tension (20) par l'intermédiaire d'une ferrure de renvoi (22) ancrée sur le châssis du véhicule, caractérisé en ce que le mécanisme de tension (20) engage le tronçon de ceinture (16a) situé entre la ferrure de renvoi (22) et la ferrure terminale (18) à proximité de la ferrure terminale (18) en formant une boucle de sangle.

2. Système de tendeur de ceinture selon la revendication 1, caractérisé en ce que le mécanisme de tension (20) est raccordé au tronçon de ceinture (16a) situé entre le fermoir de ceinture (14) et la ferrure terminale (18), au moyen d'un câble de traction (26).

3. Système de tendeur de ceinture selon la revendication 1 ou 2, caractérisé en ce que la ferrure de renvoi (22) et la ferrure terminale (18) sont agencées côte à côte et sont ancrées sur le châssis du véhicule en particulier au moyen d'un boulon fileté (24) commun.

4. Système de tendeur de ceinture selon l'une quelconque des revendications 1 à 3, caractérisé en ce que la ferrure de renvoi (22) est équipée de façon à présenter peu de frottement, en particulier en utilisant un rouleau de renvoi rotatif ou une structure de surface qui réduit les frottements, sur la surface de renvoi.

5. Système de tendeur de ceinture selon l'une quelconque des revendications précédentes, caractérisé en ce que le mécanisme de tension (20) est formé par un mécanisme d'entraînement pyrotechnique linéaire.
